**Europäisches Patentamt**

**European Patent Office**

**Office européen des brevets**

(19)

(11) Veröffentlichungsnummer: **0 273 111 B1**

# EUROPÄISCHE PATENTSCHRIFT

(12)

(45) Veröffentlichungstag der Patentschrift:
16.05.90

(51) Int. Cl.⁵: **C02F 3/30, C02F 3/28, C02F 1/52**

(21) Anmeldenummer: 87114139.6

(22) Anmeldetag: 28.09.87

(54) **Verfahren zur Reinigung Phosphathaltiger Abwässer und biologischer Phosphorelimination sowie Anlage zur Durchführung dieses Verfahren.**

(30) Priorität: 30.12.86 DE 3644770

(43) Veröffentlichungstag der Anmeldung:
06.07.88 Patentblatt 88/27

(45) Bekanntmachung des Hinweises auf die Patenterteilung:
16.05.90 Patentblatt 90/20

(84) Benannte Vertragsstaaten:
AT BE CH DE ES FR GB GR IT LI NL SE

(56) Entgegenhaltungen:
EP-A- 0 026 938
DE-A- 505 154
DE-A- 1 207 294
FR-A- 2 503 690

JOURNAL OF THE WATER POLLUTION CONTROL
FEDERATION, Band 56, Nr. 7, Juli 1984, Seiten 867-873,
Washington, US; C.W. DEAKYNE et al.: "Pilot plant
demonstration of biological phosphorus removal"
CHEMICAL ENGINEERING, Band 86, Nr. 28, 31.
Dezember 1979, Seiten 34,35, New York, US; J.V.
GALDIERI: "Biological phosphorus removal"
JOURNAL OF WATER POLLUTION CONTROL
FEDERATION, Band 54, Nr. 7, Juli 1982,
Seiten 1078-1086, Washington, US; C.R. BURDICK et al.:
"Advanced biological treatment to achieve nutrient
removal"

(73) Patentinhaber: Linde Aktiengesellschaft,
Abraham-Lincoln-Strasse 21, D-6200 Wiesbaden(DE)

(72) Erfinder: Schönberger, Rainer, Alte Poststrasse 109,
D-8050 Freising(DE)

(74) Vertreter: Schaefer, Gerhard, Dr., Linde
Aktiengesellschaft Zentrale Patentabteilung,
D-8023 Höllriegelskreuth(DE)

# EP 0 273 111 B1

**Beschreibung**

Die Erfindung betrifft ein Verfahren zur Reinigung phosphathaltiger Abwässer unter biologischer Phosphorelimination, bei dem die absetzbaren und/oder nicht absetzbaren Abwasserbestandteile in aufeinanderfolgenden Behandlungsbecken zuerst unter anaeroben und dann unter aeroben Bedingungen mit Belebtschlamm behandelt werden und bei dem ein belebter Rücklaufschlamm aus dem Nachklärbecken in die unter anaeroben Bedingungen arbeitende Stufe zurückgeführt wird, sowie eine Anlage zur Durchführung eines derartigen Verfahrens.

Anders als Stickstoffverbindungen können Phosphorverbindungen aus einem Abwasser nur entfernt werden, wenn sie aufgrund von chemischen oder biochemischen Reaktionen in festem Zustand aus dem Abwasser abgeschieden werden können. Die vorher erforderliche Überführung von Phosphaten aus dem Wasser in den festen Zustand kann dabei nur durch Inkorporation in die Biomasse oder durch chemische Fällung erfolgen.

Bereits seit vielen jahren werden auf einer Vielzahl von Kläranlagen chemische Fällungsverfahren zur Elimination von Phosphor eingesetzt. Verfahren, bei denen die Phosphorelimination auf biologischem oder biologisch-chemischem Wege erfolgt, stellen eine vergleichsweise junge Entwicklung dar. Bei den rein biologischen Verfahren versucht man dabei, den gesamten zu eliminierenden Phosphor auf biologischem Wege im Überschußschlamm zu fixieren. Bei dem biologisch-chemischen Verfahren wird dagegen der biologische Effekt in spezieller Verfahrensweise mit einer äußerst sparsam arbeitenden Kalkfällung kombiniert.

Bei den biologischen Verfahren nutzt man die Erscheinung aus, daß der im Abwasser enthaltene Phosphor von gewissen Mikroorganismen in Abhängigkeit von den Bedingungen, unter denen sich Abwasser und Belebtschlamm im Kontakt befinden, freigesetzt oder gebunden wird. Der Phosphor liegt dabei im Abwasser praktisch ausschließlich als Phosphat vor, und zwar zum größten Teil als gelöstes Phosphat sowie zu einem wesentlich geringeren Teil als gebundenes, partikuläres Phosphat. Unterzieht man den Belebtschlamm in einer nach dem Belebungsverfahren arbeitenden biologischen Kläranlage einem ständigen Wechsel von anaeroben Bedingungen (Abwesenheit von gelöstem Sauerstoff, Nitrit und Nitrat) und aeroben Bedingungen (Anwesenheit von gelöstem Sauerstoff), so zeigt sich, daß der Belebtschlamm unter anaeroben Bedingungen Phosphat freisetzt und unter aeroben Bedingungen Phosphat aufnimmt. Der Phosphatfreisetzung in der anaeroben Phase steht also eine Phosphataufnahme in der aeroben Phase gegenüber. Es hat sich dabei bei bislang allen auf diesem Gebiet durchgeführten Untersuchungen gezeigt, daß der Grad der Phosphataufnahme unter aeroben Bedingungen in einem direkten Zusammenhang mit dem Grad der vorangegangenen Phosphatrücklösung in der anaeroben Phase steht.

Wesentlich für eine Phosphorelimination auf biologischem Wege ist nun die Tatsache, daß das Ausmaß der Phosphataufnahme stets höher ist als das Ausmaß der vorangegangenen Rücklösung. Da die Trennung des gereinigten Abwassers vom biologischen Schlamm im Anschluß an die aerobe Phase erfolgt, verbleibt eine Netto-Elimination, d. h. eine erniedrigte Phosphorkonzentration im Ablauf und eine erhöhte Phosphorkonzentration im Überschußschlamm der Kläranlage.

Zur Steigerung der Eliminationsleistung wird daher versucht, eine möglichst hohe Menge an Überschußschlamm zu erzeugen und/oder den Phosphorgehalt im Überschußschlamm möglichst hoch ansteigen zu lassen.

Die spezifische Überschußschlamm-Produktion ist dabei festgelegt durch die Schlammbelastung.

Der Phosphorgehalt des Überschußschlammes läßt sich aufgrund der oben genannten Zusammenhänge steigern, und zwar durch eine Intensivierung der Phosphorrücklösung und der hieraus resultierenden anschließenden intensivierten Phosphoraufnahme.

Will man die Phosphorelimination durch Veränderung der Phosphorrücklösung/Phosphoraufnahme in einer biologischen Kläranlage beeinflussen, müssen ferner als weitere Gegebenheiten berücksichtigt werden:

1. Die Anwesenheit von Nitrit sowie Nitrat unterbindet die Phosphorrücklösung. In den anaeroben Anlagenteil sollen also keine nitrit- bzw. nitrathaltigen Teilströme einfließen.

2. Die Verfügbarkeit eines leicht abbaubaren Substrats beschleunigt die Phosphorrücklösung.

Bei den bisher entwickelten Verfahren zur biologischen Phosphorelimination wird diesen beiden Faktoren in unterschiedlicher Weise Rechnung getragen. Bei dem bislang einfachsten derartigen Verfahren, dem sog. A/O-Verfahren, das beispielsweise beschrieben ist in der Untersuchung von Krichten D.J., Hong S.N., Tracy K.D., Applied biological phosphorus removal by the A/O.Process, Internat. Conf. "Phosphorus in the Environment" Lissabon, Juli 1985, ist dem Belebungsbecken ein unbelüftetes, volldurchmischtes Becken bze. eine Beckenkaskade vorgeschaltet. In dieses Becken treten Rücklaufschlamm und rohes bzw. vorgeklärtes Abwasser ein, wobei sich in diesem Becken Schlammaufenthaltszeiten von 1 bis 5 h ergeben. Aufenthaltszeiten im anschließenden Belebungsbecken liegen etwa bei 2 bis 5 h. Die Anwendung dieses Verfahrens beschränkt sich auf ausreichend hoch belastete Anlagen, in welchen keine Nitrifikation (mikrobielle Oxidation von Ammonium zu Nitrit und Nitrat) auftritt. Diese würde nämlich dazu führen, daß mit dem Rücklaufschlamm Nitrit bzw. Nitrat in den unbelüfteten Anlagenteil gelangen und dort die Phosphorrücklösung unterbinden.

Bei einem anderen Verfahren, dem sog. "Phoredox"- oder modifizierten Bardenpho- Verfahren, treten wie beim A/O-Verfahren Rücklaufschlamm und rohes bzw. vorgeklärtes Abwasser zunächst in ein inbelüftetes volldurchmischtes Becken bzw. in eine Beckenkaskade. In den nachfolgenden Anlagenteilen wird jedoch neben einer Nitrifikation auch eine vollständige Denitrifikation (mikrobielle Reduktion von Nitrit und Nitrat zu molekularem Stickstoff, welcher als Gas aus dem Abwasser entweicht) erreicht, so daß mit dem Rücklaufschlamm kein Nitrit bzw. Nitrat in den anaeroben Anlagenteil gelangen kann. Dieses Verfahren ist also speziell auf schwachbelastete Anlagen mit biologischer Stickstoff- und Phosphorelimination zugeschnitten. In dem der Phosphor-Rücklösung dienenden ersten unbelüfteten, volldurchmischten Becken werden dabei Schlammverweilzeiten in der Größenordnung von 1,5 h erhalten.

Ein weiteres Verfahren ist das sog. UCT- (university of cape town) Verfahren, das beispielsweise beschrieben ist in Ekama G.A., Marais G.R., Zusätzliche biologische P-Elimination beim Belebungsverfahren - Erfahrungen in Südafrika. GWF 126, Seite 241 bis 249 (1985). Diese Verfahren wurde entwickelt, um den hohen Aufwand, der für eine vollständige Denitrifikation erforderlich ist, umgehen zu können. Man beschränkt sich bei diesem Verfahren bewußt auf eine vorgeschaltete Denitrifikation, mittels welcher aus prinzipiellen Gründen niemals eine 100%ige Nitrit- bzw. Nitratentfernung erzielt werden kann. Da der Rücklaufschlamm somit nitrit- und nitrathaltig ist, wird er zunächst in ein Denitrifikationsbecken geleitet. Aus diesem Becken wird der Schlamm dann in das vorgeschaltete, unbelüftete Mischbecken geleitet, das der Phosphorrücklösung dienen soll. Dort erfolgt wie bei den beiden zuerst genannten Verfahren der Kontakt mit rohem bzw. vorgeklärtem Abwasser bei völliger Durchmischung, wobei die Schlammverweilzeiten in der Größenordnung von 1,5 h liegen.

Die drei bisher beschriebenen Verfahren sind die drei hauptsächlich realisierten biologisch arbeitenden Verfahren zur Phosphorelimination. Ein weiteres Verfahren, das sog. Biodenipho-Verfahren, unterscheidet sich, was die Realisierung der Phosphorrücklösung anbelangt, nicht grundsätzlich von den bereits beschriebenen Verfahren.

Wesentliche Unterschiede gegenüber den bisher beschriebenen Verfahren bestehen beim sog. Phostrip-Verfahren, das beispielsweise beschrieben ist in Levin G.V., Topol G.J., Tarnay A.G., Operation of Full Scale Biological Phosphorus Removal Plant, JWPCF 47, 577-590 (1975). Dieses Verfahren stellt eine Kombination der erhöhten biologischen Phosphorelimination mit einem chemische Fällungsverfahren zur Phosphorentfernung dar. Bei diesem Verfahren wird ein Teil des Rücklaufschlammes in ein als "Stripper" bezeichnetes Absetzbecken geleitet. Während in diesem Becken aufgrund einer mehrstündigen anaeroben Aufenthaltszeit die Phosphatrücklösung einsetzt, findet gleichzeitig über eine statische Eindickung die Abtrennung eines phosphathaltigen Überstandes statt. Dieses phosphathaltige Überstandswasser wird anschließend chemisch gefällt.

Beim Phostrip-Verfahren verfolgt man also im Gegensatz zu den anderen Verfahren das Ziel, den Anteil der Phosphorfracht, welcher mittels rein biologischer Effekte nicht aus dem Abwasser zu eliminieren ist, durch chemische Abwasserteilstromfällung zu erfassen. Die spezifischen Besonderheiten einer Fällung mit Kalk ($Ca(OH)_2$) bedingen, daß bei der abwasserteilstromfällung der Kalk sehr viel sparsamer eingesetzt werden kann als bei der Fällung aus dem gesamten Abwasserstrom.

Prinzipiell ist die Anwendung des Phostrip-Verfahrens auf nicht-nitrifizierende, also hoch belastete Belebungsanlagen beschränkt, da Nitrit bzw. Nitrat mit dem Rücklaufschlamm in den Stripper eintreten können. Entsprechende Gegenmaßnahmen sind jedoch denkbar und wurden auch bereits realisiert. Das zuletzt genannte Verfahren wurde mehrfach modifiziert, zum einen mit der Zielrichtung "Beschleunigung der Phosphorrücklösung im Stripper" (Einspeisung von vorgeklärtem Abwasser), vor allem aber mit der Zielrichtung "Weitgehende Überführung von Phosphat in den Stripper-Überstand" (Einspeisung von vorgeklärten Abwassers, gereinigten Abwassers oder chemisch behandelten Abwassers, Kreislaufführung von Stripperschlamm).

Die Leistungsfähigkeit der rein biologisch arbeitenden Verfahren zur Phosphorelimination (A/O, Phoredox, UCT, Biodenipho) hat sich bislang in den allermeisten Fällen als unzureichend herausgestellt.Aufgrund voneinander abweichender Verfahrensvoraussetzungen lassen sich die bisher in der Literatur dokumentierten Ergebnisse kaum direkt miteinander vergleichen, und Paralleluntersuchungen fehlen bisher völlig. Es läßt sich jedoch feststellen, daß eine Gesamtphosphor-Elimination von über 75 % nur in den allerseltensten Fällen erzielt wurde.

Die beim Phostrip-Verfahren wesentlich höheren erzielbaren Eliminationsraten sind auf die chemische Teilstromfällung zurückzuführen. Auch bei diesem Verfahren bleibt der biologische Anteil an der Gesamteliminationsleistung auf unter 75 % beschränkt.

Allen bisher beschriebenen Verfahren, vielleicht mit Ausnahme des A/O-Verfahrens, haftet der große Nachteil an, daß sie kompliziert sind, daß damit ein hoher Investitionsaufwand entsteht und außerdem der Betrieb nur von einem speziell ausgebildeten Personal aufrecht erhalten werden kann.

Der vorliegenden Erfindung liegt somit die Aufgabe zugrunde, ein Verfahren gemäß Oberbegriff des Patentanspruchs 1 bzw. eine Anlage zur Durchführung eines derartigen Verfahrens so auszugestalten, daß bei einem relativ geringen oder wenigstens verminderten Anlagenaufwand die biologische Phosphorelimination verbessert wird.

Diese Aufgabe wird bei einem Verfahren der genannten Art durch die im Kennzeichen des Patentanspruchs 1 wiedergegebenen Verfahrensmerkmale bzw. die im Kennzeichen des Anspruchs 14 wiedergegebenen Anlagenmerkmale gelöst.

Vorteilhafte Ausgestaltungen sind den jeweiligen Unteransprüchen zu entnehmen.

Dem erfindungsgemäßen Verfahren liegt die aufgrund mehrjähriger Erfahrungen mit halbtechnischen Anlagen, bei welchen eine biologische Phosphorelimination erzielt werden sollte, gewonnene Erkenntnis zugrunde, daß für eine Steigerung der Phosphoreliminationsleistung zwei Gesichtspunkte besonders wesentlich sind:

1. Die anaerobe Aufenthaltszeit des Belebtschlammes muß gegenüber den bisher erprobten Verfahren erheblich gesteigert werden und

2. das gesamte Potential an leichtabbaubarem Substrat im Rohabwasser muß verfügbar gemacht werden, um die Phosphat-Rücklösungsgeschwindigkeit während der anaeroben Aufenthaltszeit zu steigern.

Unter dem ersten der genannten Gesichtspunkte ergab sich, daß bei einem Kontakt von Abwasser und Rücklaufschlamm in dem bisher dafür vorgesehenen totaldurchmischten Becken immer zu kurze anaerobe Schlammaufenthaltszeiten resultieren. Da die Beckengröße nicht beliebig gesteigert werden kann, wurde gemäß der vorliegenden Erfindung der Weg beschritten, die Schlammaufenthaltszeit von der hydraulischen Aufenthaltszeit zu entkoppeln, was sich am einfachsten in einem Absetzbecken realisieren ließ, in welchem der Schlamm nach dem Kontakt mit dem Abwasser sedimentiert. Am Grund des Absetzbeckens wird dann lediglich die Menge des eingedickten Schlammes abgezogen, welche sich aus der Feststoffbilanz zwangsläufig ergibt. Bei guter Eindickung lassen sich sehr hohe Schlammaufenthaltszeiten erzielen, die im Bereich von 5 bis 30 h liegen können, unter praktischen Bedingungen besonders vorteilhaft jedoch im Bereich von 10 bis 24 h liegen.

Um dem zweiten der genannten Gesichtspunkte in gewünschter Weise Rechnung tragen zu können, erwies es sich als besonders zweckmäßig daß der Rücklaufschlamm am Kopf des Beckens mit Rohabwasser, in Kontakt gebracht wird. Auf die bisher meist vorgesehene Vorklärung kann verzichtet werden, und das in den meisten Fällen in einer Kläranlage zur Verfügung stehende Vorklärbecken kann zum anaeroben Phosphat-Rücklösebecken umfunktioniert werden, in dem die erste Stufe des erfindungsgemäßen Verfahrens durchgeführt wird.

Unter Rohabwasser wird dabei im Rahmen der vorliegenden Erfindung ein kommunales, gewerbliches oder industrielles Abwasser verstanden, das gegebenenfalls in einer Rechenstufe, Sand- und/oder Fettfangstufe vorbehandelt wurde, jedoch keiner Vorklärung unterzogen wurde und damit noch einen hohen Anteil an absetzbaren Stoffen aufweist.

Das erfindungsgemäße Verfahren, wie es nachfolgend anhand von Figuren und Ausführungsbeispielen noch näher erläutert wird, zeichnet sich durch eine große Einfachheit aus und durch die Möglichkeit, bestehende Kläranlagen ohne wesentliche Umbaumaßnahmen für eine weitgehende biologische Phosphorelimination auszurüsten. In einem über zweimonatigen Versuchsbetrieb hat es bereits seine Überlegenheit gegenüber den bestehenden Verfahren bewiesen. Bei üblichen Konzentrationen von Phosphor im Rohabwasser von im Mittel 8 mg/l Gesamtphosphor konnten Ablaufwerte von im Mittel kleiner als 1 mg/l Gesamtphosphor eingehalten werden. Es errechnete sich eine Phosphorelimination von fast 90 %. Bezüglich Phosphat lag die Eliminationsleistung noch erheblich höher. Phosphat wird dabei praktisch vollständig vom Belebtschlamm aufgenommen. Die Restgehalte an Phosphor im Ablauf waren größtenteils auf partikulären Phosphor zurückzuführen.

Um die hervorragende Eliminationsleistung des erfindungsgemäßen Verfahrens zu erklären, sei noch kurz auf die theoretischen Hintergründe des erfindungsgemäßen Verfahrens eingegangen.

Es ist bekannt, daß Vorklärschlamm, welcher einige Zeit lang anaeroben Bedingungen ausgesetzt ist, in die sog. saure Gärung übergeht. Hierbei werden durch manche der im Vorklärschlamm enthaltenen Mikroorganismen Fette, Zucker und andere abbaubare Substanzen zu niederen organischen Fettsäuren, vor allem Acetat, abgebaut. Da als Abbauprodukte organische Säuren entstehen, bezeichnet man diesen Vorgang auch als Acidogenese. Die Abbauprodukte werden ausgeschieden. Einem weiteren Abbau werden diese Stoffe erst dann unterzogen, wenn infolge einer sehr langen Aufenthaltszeit (mehrere Tage bis Wochen) die sog. Methangärung einsetzt.

Es war in Vorversuchen festgestellt worden, daß die Zugabe der genannten Abbauprodukte zum Rücklaufschlamm eine erhebliche Beschleunigung der Phosphorrücklösung in dem entsprechenden Anlagenteil bewirkt . Da für beide Vorgänge, die Phosphat-Freisetzung aus Rücklaufschlamm und die Freisetzung organischer Säuren aus Vorklärschlamm, identischen Milieubedingungen gefordert werden, nämlich anaerobe Verhältnisse, wurde zur Schaffung der vorliegenden Erfindung der Schluß gezogen, daß es vorteilhaft sein könnte, beide Vorgänge in einem Reaktor zu vereinen. Genau das geschieht in dem Absetzbecken, in dem die erste Stufe des erfindungsgemäßen Verfahrens durchgeführt wird und das somit als integriertes Fermentations- und Phosphatrücklösebecken bezeichnet werden kann. Der frische Vorklärschlamm dickt gemeinsam mit dem Rücklaufschlamm unter anaeroben Bedingungen ein, organische Säuren werden freigesetzt und sind für den Rücklaufschlamm unmittelbar verfügbar. Die organischen Fettsäuren werden von Organismen des Rücklaufschlamms aufgenommen, und in Korrelation hierzu ist eine Freisetzung von Phosphat festzustellen. Aufgrund der geschaffenen optimalen Verhältnisse verläuft die Phosphatfreisetzung äußerst intensiv, was unter Berücksichtigung der einleitenden Erläuterungen dazu führt, daß auch die Phosphataufnahme im Belebungsbecken optimal ist.

Die Anwendbarkeit des Verfahrens beschränkt sich nicht auf hochbelastete Anlagen ohne Nitrifikation. Das reduktive Potential im anaeroben Absetzbecken ist so groß, daß die Rücklaufschlamm-Denitrifikation erfolgen kann, ohne daß die Phosphatrücklösungskapazität wesentlich beeinträchtigt wird. Im Gegensatz zu den bekannten Verfahren, bei denen mit totaldurchmischten Becken gearbeitet wird, bei denen das mit dem Rücklaufschlamm eingetragene Nitrat sofort in alle Bereiche des Beckens verteilt wird und überall die Phosphatrücklösung unterbindet, gelangt bei dem Absetzbecken des erfindungsgemäßen Verfahrens das aus dem Rücklaufschlamm stammende Nitrat bei dessen Einleitung zusammen mit dem Rohabwasser lediglich in die oberste Zone des Beckens, wo es schnell reduziert wird. Damit ist eine Hemmung der Phosphatrücklösung in den unteren Zonen ausgeschlossen. Lediglich die Tatsache, daß bei der Nitratreduktion leichtabbaubares Substrat verbraucht wird, setzt das Ausmaß der Phosphatrücklösung etwas herab. Da aber das im Rohabwasser gelöste, leichtabbaubare Substrat für die Nitratreduktion vollkommen ausreicht, sind die bei der Fermentation freigesetzten organischen Säuren für die Phosphatrücklösung vollständig verfügbar.

Eine stabile Phosphorelimination ist somit auch bei Kläranlagen gewährleistet, die sich im kritischen Belastungsbereich befinden und nur zeitweise nitrifizieren. Zudem läßt sich das erfindungsgemäße Verfahren auch ohne weiteres mit einer weitgehenden Stickstoffelimination kombinieren, sei es mittels vorgeschalteter Denitrifikation, simultaner Denitrifikation oder Wechselbetrieb (Biodenitro-Verfahren). Eine Kombination ist prinzipiell mit jedem Verfahren möglich, bei welchem ein mobiler, nicht auf Trägermaterial fixierter Belebtschlamm existiert.

Im Bedarfsfall kann der vom anaerob betriebenen Absetzbecken abgezogene Dickschlamm auch einer zusätzlichen anaeroben Aufenthaltszeit unterzogen werden. Dies kann in einem weiteren Absetzbecken oder einem Mischbecken erfolgen. Erforderlich dürfte eine derartige Maßnahme vor allem dann sein, wenn die Eindickung des Mischschlamms im anaeroben Absetzbecken aufgrund hoher hydraulischer Belastung nicht so weitgehend ist, daß eine ausreichende anaerobe Aufenthaltszeit des Schlamms erzielt wird.

In einer Weiterbildung des Erfindungsgedankens werden dem unter anaeroben Bedingungen gehaltenen Absetzbecken nur die absetzbaren Abwasserbestandteile zugeführt, während die nicht absetzbaren Abwasserbestandteile direkt in das unter aeroben Bedingungen gehaltene Behandlungsbecken geleitet werden. Hierzu ist dem anaerob arbeitenden Absetzbecken zweckmäßigerweise ein Vorklärbecken vorgeschaltet, in dem die absetzbaren Abwasserbestandteile, also Vorklärschlamm, und die nicht absetzbaren Abwasserbestandteile, also vorgeklärtes Abwasser, voneinander getrennt werden. Durch diese Verfahrensvariante wird das anaerob betriebene Absetzbecken hydraulisch niedriger belastet, es resultiert eine bessere Schlammeindickung und damit eine höhere anaerobe Schlammaufenthaltszeit. Ein Nachteil ist allerdings, daß die gelösten Abwasserinhaltsstoffe nicht für eine Intensivierung der Phosphor-Rücklösung in der anaeroben Stufe wirksam werden können da das vorgeklärte Abwasser direkt in die aerobe Behandlungsstufe geleitet wird. Durch die erhöhte anaerobe Aufenthaltszeit des Schlamms erfolgt andererseits aber eine weitergehende Phosphorrücklösung und damit auch eine weitergehende Phosphoraufnahme im Belebungsbecken. Die Phosphoreliminationsleistung wird verbessert.

Der Vorklärschlamm könnte zusätzlich einer Behandlung unterzogen werden, welche geeignet ist, die groben Feststoffe von den feinen zu trennen. Hierfür kommt beispielsweise eine Zentrifuge in Frage. Der abzentrifugierte Schlamm, welcher die groben Feststoffe enthält und in stark eingedickter Form anfällt, kann direkt der Schlammbehandlung zugeführt werden. Das Zentrat, mit einem hohen Anteil feiner Feststoffe, wird in das anaerobe Absetzbecken geleitet.

Eine andere Verfahrensvariante des erfindungsgemäßen Verfahrens sieht vor, dem anaerob betriebenen Absetzbecken nur die nicht absetzbaren Abwasserbestandteile zuzuführen, während die absetzbaren Abwasserbestandteile abgezogen werden. Die Trennung der absetzbaren Abwasserbestandteile, d.h. von Vorklärschlamm, unter nicht absetzbaren Abwasserbestandteilen, d.h. von vorgeklärtem Abwasser, erfolgt wiederum in einem vorgeschalteten Vorklärbecken. Bei dieser Beschickung des anaerob arbeitenden Absetzbeckens mit vorgeklärtem Abwasser kommt zwar der Aspekt des Aufschlusses partikularen Substrats nicht zur Geltung, dafür aber der Aspekt einer erhöhten anaeroben Schlammaufenthaltszeit im Vergleich mit totaldurchmischten Systemen. Durch diese Verfahrensführung werden mögliche negative Auswirkungen eines Verzichts auf die Vorklärstufe, wie erhöhter Sauerstoffbedarf, Ablagerungen, Verstopfungen usw., vermieden.

Bei ungünstiger Abwasserzusammensetzung (hohe Phosphatkonzentrationen, niedrige BSB-Konzentrationen) können die bisher beschriebenen Verfahrensvarianten an ihre Leistungsgrenzen gelangen. In diesem Fall ist erfindungsgemäß vorgesehen, mittels einer Abwasserteilstromfällung eine hohe Phosphat-Fracht bei geringstem Kalkeinsatz chemisch zu binden. Zu diesem Zweck wird der aus dem anaerob betriebenen Absetzbecken abgezogene Schlamm in phosphatreiches Wasser und phosphatarmen Schlamm z.B. mittels einer Zentrifuge aufgetrennt. Das phosphatreiche Wasser wird einer Kalkfällung bei einem pH-Wert von ca. 9 unterzogen, wobei entstehender Fällschlamm abgezogen und überstehendes Wasser dem unter aeroben Bedingungen gehaltenen Behandlungsbecken zugeführt wird. Der phosphatarme Schlamm wird direkt dem unter aeroben Bedingungen gehaltenen Behandlungsbecken zugeleitet. Durch die geringe Abwasserteilstrommenge und die hohen gelösten Phosphatkonzentrationen sind für die Phosphatfällung ideale Voraussetzungen gegeben. Der abgezogene Calciumphosphat-Fällschlamm kann einer weiteren Verwertung zugeführt werden.

Erfindungsgemäß ist auch vorgesehen, den vom anaerob betriebenen Absetzbecken abgezogenen Dickschlamm direkt einer Kalkfällung zu unterziehen. Der bei einem pH-Wert von ca. 9 entstehende Fällschlamm gelangt zusammen mit dem organischen Schlamm in das aerob betriebene Behandlungsbecken und wird dort aufgrund der sich einstellenden pH-Absenkung zum Teil wieder in Lösung gebracht. Ein mehr oder weniger großer Anteil des Fällschlamms wird aber wegen der sogenannten "Alterung" der Calcium-Phosphat-Kristalle in fester Form verbleiben und verläßt das System mit dem Überschußschlamm. Zum biologische gebundenen Phosphat addiert sich also ein chemisch gebundener Anteil, wodurch sich der Eliminationswirkungsgrad erhöht.

Die Tatsache, daß bei dem zugrundeliegenden Verfahrensprinzip eine Aufkonzentrierung von Phosphat in einer geringen Anlagenteilstrommenge erzielt wird, macht sich diese erfindugnsgemäße Verfahrensvariante also bei der Teilstromfällung mit Kalk zunutze. Bei der Fällung mit Kalk hängt der Wirkungsgrad der Phosphorelimination von der erzielbaren pH-Anhebung ab. Eine Aufkonzentrierung des Phosphats in einer geringen Abwasser-Teilstrommenge bedeutet also, daß sich hier der gleiche Wirkungsgrad mit sehr viel geringerem Kalkeinsatz erzielen läßt als bei der Fällung der Gesamtabwassermenge. Die Kalkeinsparung ist dabei direkt proportional dem Verhältnis Abwasserteilstrommenge zu Gesamtabwassermenge.

Machfolgend wird das erfindungsgemäße Verfahren unter Bezugnahme auf Figuren und anhand eines praktischen Ausführungsbeispiels noch näher erläutert.

Es zeigen:

Figur 1 ein Flußdiagramm mit den erfindungswesentlichen Grundelementen des erfindungsgemäßen Verfahrens.

Figur 2 ein Flußdiagramm, das zusätzlich zu den erfindungswesentlichen Grundelementen des erfindungsgemäßen Verfahrens ein Mischbecken zur Verlängerung der anaeroben Aufenthaltszeit enthält.

Figur 3 ein Flußdiagramm, das zusätzlich zu den erfindungswesentlichen Grundelementen des erfindungsgemäßen Verfahrens ein zusätzliches Absetzbecken zur Verlängerung der anaeroben Aufenthaltszeit enthält.

Figur 4 ein Flußdiagramm, das die Betriebsweise der mit Vorklärschlamm beschickten erfindungsgemäßen Anlage beschreibt.

Figur 5 ein Flußdiagramm, das die Betriebsweise der erfindungsgemäßen Anlage mit Abwasserteilstromfällung und separater Fällschlammabfuhr beschreibt.

Figur 6 ein Flußdiagramm, das die Betriebsweise der erfindungsgemäßen Anlage mit Abwasserteilstromfällung ohne separater Fällschlammabfuhr beschreibt.

Figur 7 ein Flußdiagramm, das die Betriebsweise einer Versuchsanlage in den Versuchsphasen 1a und 1b des im Beispiel beschriebenen Versuchs beschreibt.

Figur 8 ein Flußdiagramm, das die Betriebsweise einer Versuchsanlage während der Versuchsphase 2 des im Beispiel beschriebenen Versuchs beschreibt.

Figur 9 ein Diagramm, das den Verlauf der Phosphatrücklösung im anaeroben Absetzbecken in den ersten Wochen nach Inbetriebnahme der Versuchsanlage des Beispiels zeigt.

Figur 10 ein Diagramm, das den Verlauf der Phosphataufnahme in der Belebungsbeckenkaskade in den ersten Wochen nach der Inbetriebnahme der Versuchsanlage des Beispiels zeigt.

Figur 11 in Diagrammform die Gesamtphosphor-Konzentrationen im Zu- und Ablauf der Versuchsanlage und die resultierende Phosphorelimination im Beispiel, wobei die Meßdaten aus 24 Stunden Mischproben ermittelt wurden.

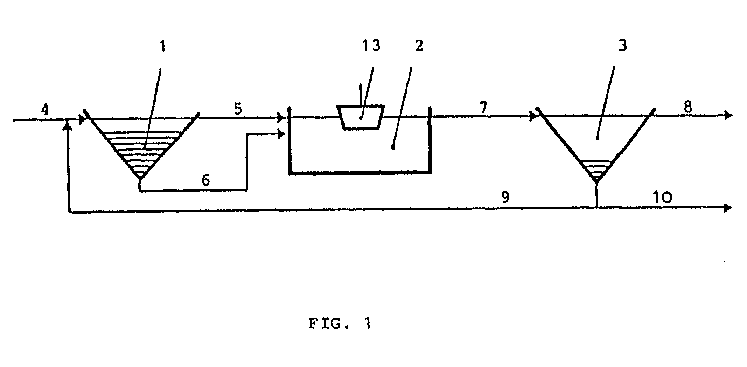

Bezug nehmend auf Fig. 1 umfaßt eine erfindungsgemäße Anlage drei miteinander verbundene Anlagenteile, die drei Verfahrensstufen entsprechen. Es sind dies ein Absetzbecken 1, ein Belebungsbecken 2 und ein Nachklärbecken 3. Dem Absetzbecken 1 wird über eine Leitung 4 ein Rohabwasser zugeführt, dem am Kopf des Absetzbeckens 1 über eine Leitung 9 Rücklaufschlamm aus dem Absetzbecken 3 zugemischt wird. Die Zuleitung 4 mündet dabei im Bereich der Flüssigkeitsoberfläche im Absetzbecken ein, so daß die absetzbaren Feststoffteilchen ungehindert nach unten sinken können und in dem Bereich, wo ein noch relativ frisches Gemisch aus Rohabwasser und Rücklaufschlamm vorliegen, eine Denitrifikation erfolgen kann, die verhindert, daß Nitratbestandteile in den abgesetzten Dickschlamm gelangen. Über eine Leitung 5 wird der Überlauf des Absetzbeckens 1 direkt oder, wie noch beschrieben wird, über weitere zwischengeschaltete anaerobe Stufen, einem Belebungsbecken 2 zugeführt, dem gleichzeitig auch über eine Leitung 6 Dickschlamm vom Boden des Absetzbeckens zugeführt wird. Das Belebungsbecken 2 ist irgendein bekanntes geeignetes Belebungsbecken, das von der Oberfläche her belüftet sein kann (z.B. mit Belüftern 13) oder mittels sonstiger an sich bekannter Vorrichtungen zum Belüften oder Begasen mit Luft oder reinem Sauerstoff. Das Belebungsbecken 2 ist in üblicher Weise über eine Leitung 7 mit dem Nachklärbecken 3 verbunden, aus dem in an sich üblicher Weise über eine Leitung 8 das geklärte Abwasser abfließt, während vom Boden ein biologischer Schlamm abgezogen wird, der in einen über eine Leitung 9 zurückgeführten Rücklaufschlamm und einen über eine Leitung 10 abgezogenen Überschußschlamm aufgeteilt wird. Anders als in Fig. 1 dargestellt kann der Überschußschlamm aber auch direkt aus dem Belebungsbecken 2 abgezogen werden, was den Vorteil haben könnte, daß der Phosphorgehalt des Überschußschlammes nicht durch eine im Nachklärbecken einsetzende Phosphorrücklösung vermindert werden kann. Ein Abzug von Überschußschlamm aus dem Absetzbecken ist weniger bevorzugt, kann aber in Einzelfällen ebenfall sinnvoll sein. Das Absetzbecken 1 gewährleistet, daß dort Schlammverweilzeiten erhalten werden, die über den hydraulischen Verweilzeiten liegen, so daß eine intensive Phosphatrücklösung erhalten wird, die Voraussetzung für eine effective Phosphataufnahme im machfolgenden Belebungsbecken ist.

Das Absetzbecken 1 kann dabei ein in den meisten Kläranlagen vorhandenes übliches Vorklärbecken sein, das durch entsprechende Modifizierung, d.h. durch eine Anpassung der verschiedenen Zu- und Ableitungen, in ein anaerobes Absetzbecken für das vorliegende Verfahren umgewandelt wurde. Die Vorteile eines derartigen erfindungsgemäßen Verfahrens wurden bereits eingangs im wesentlichen beschrieben.

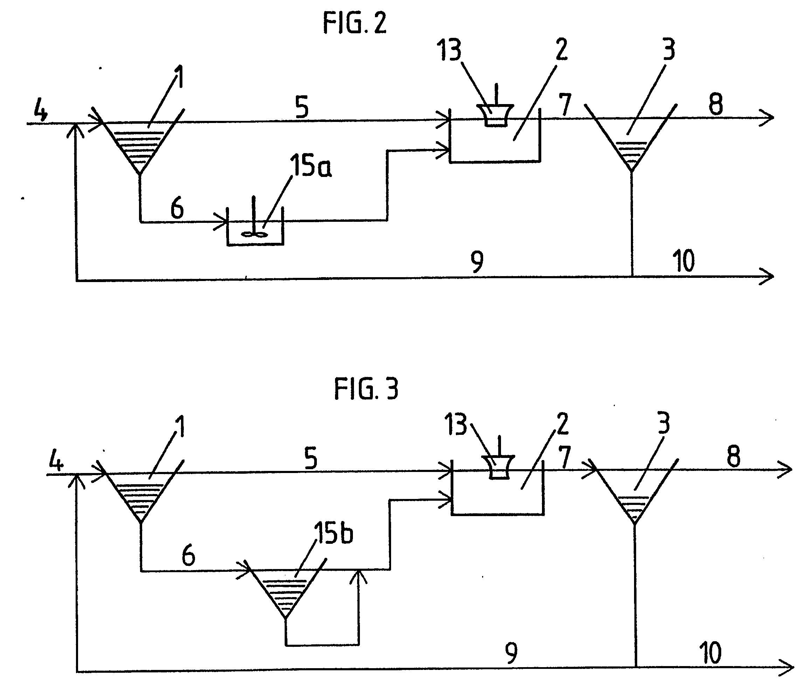

Die Figuren 2 - 6 zeigen bevorzugte Ausgestaltungen der Erfindung, wobei gleiche Bezugszeichen die gleichen Bedeutung haben wie in Figur 1.

Figur 2 zeigt eine erfindungsgemäße Anlage, die zusätzlich zu den erfindungswesentlichen Grundelementen ein Mischbecken zur Verlängerung der anaeroben Aufenthaltszeit enthält. Die Ableitung 6 für Dickschlamm vom Boden des anaeroben Absetzbeckens 1 ist mit einem Mischbecken 15a verbunden, das ebenfalls unte anaeroben Bedingungen betrieben wird. Der so behandelte Schlamm wird schließlich dem belüfteten Belebungsbecken 2 zugeführt. Eine zusätzliche anaerobe Aufenthaltszeit ist notwendig, wenn die Eindickung des Mischschlamms im anaeroben Absetzbecken 1 aufgrund vorhydraulischer Belastung nicht weitgehend genug ist.

Eine andere Möglichkeit, die anaerobe Aufenthaltszeit zu verlängern, zeigt Figur 3, wo das Mischbecken 15a der Figur 2 durch ein zweites anaerob betriebenes Absetzbecken 15b ersetzt ist.

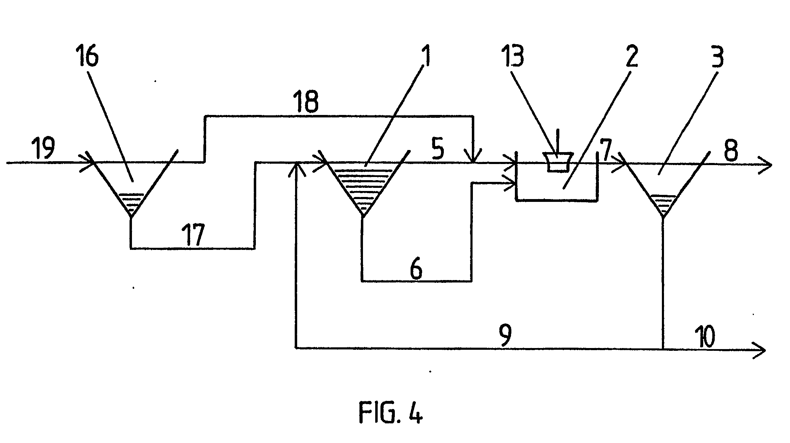

Figur 4 zeigt eine mit Vorklärschlamm beschickte erfindungsgemäße Anlage. Dem anaeroben Absetzbecken 1 ist ein Vorklärbecken 16 vorgeschaltet, dem Rohabwasser über Leitung 19 zugeführt wird. Im Vorklärbecken 16 wird das Rohabwasser in Vorklärschlamm und vorgeklärtes Abwasser getrennt. Der Vorklärschlamm wird über Leitung 17 dem anaerob betriebenen Absetzbecken 1 gemeinsam mit dem über Leitung 9 zugeführten Rücklaufschlamm zugeleitet. Das vorgeklärte Abwasser wird dagegen über Leitung 18 direkt dem belüfteten Belebungsbecken 2 zugeführt. Wie bereits weiter oben erläutert wurde, bietet diese Verfahrensführung den Vorteil, daß das anaerob betriebene Absetzbecken 1 hydraulisch niedriger belastet wird.

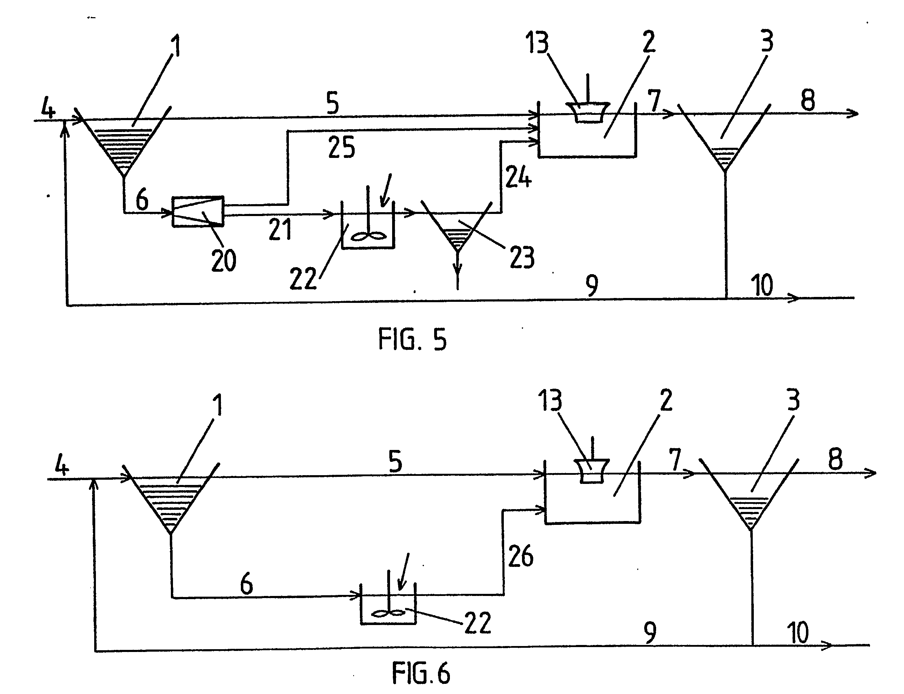

Die Figuren 5 und 6 zeigen den Betrieb der erfindungsgemäßen Anlage mit Abwasserteilstromfällung.

Bei der in Figur 5 beschriebenen Anlage wird der über Leitung 6 vom anaerob betriebenen Absetzbecken 1 abgezogene Dickschlamm einer Zentrifuge 20 zugeführt, wo er in phosphatreiches Wasser und phosphatarmen Schlamm aufgetrennt wird. Das phosphatreiche Wasser wird über Leitung 21 in ein Mischbecken 22 geleitet, dem Kalk zugegeben wird. In einem nachfolgenden Sedimentationsbecken 23 wird der entstehende Fällschlamm abgezogen, während das überstehende Wasser über Leitung 24 in das belüftete Belebungsbecken 2 eingeleitet wird. Der phosphatarme Schlamm wird dagegen direkt über Leitung 25 in das Belebungsbecken 2 geleitet. Wie bereits weiter oben ausführlich erläutert wurde, ermöglicht diese erfindungsgemäße Verfahrensvariante eine Elimination hoher Phosphat-Frachten bei geringstem Kalkeinsatz.

Eine andere Möglichkeit der Teilstromfällung zeigt Figur 6. Der vom Absetzbecken 1 über Leitung 6 abgezogene Dickschlamm wird direkt einer Kalkfällung in dem Mischbecken 22 unterzogen. Der entstehende Fällschlamm gelangt zusammen mit dem organischen Schlamm über Leitung 26 in das Belebungsbecken 2. Ein Großteil des Fällschlamms verbleibt im Belebungsbecken 2 in fester Form und verläßt die Anlage mit dem Überschußschlamm über Leitung 10.

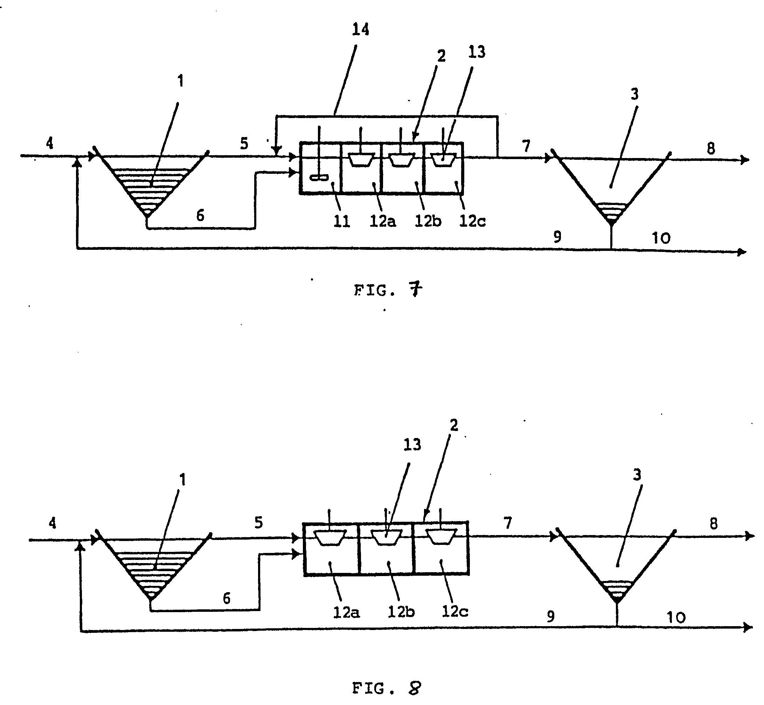

Nachfolgend wird die Erfindung anhand eines konkreten Versuchsbeispiels noch weiter erläutert, wobei in den die konkrete Versuchsanlage beschreibenden Figuren 7 und 8 gleiche Bezugszeichen die gleiche Bedeutung haben wie in Figur 1.

Ausführungsbeispiel

Dieses Ausführungsbeispiel beschreibt einen dreimonatigen Testbetrieb im halbtechnischen Maßstab.

Betriebswese der Versuchsanlage:

Aus Gründen der vorhandenen Anlagenbestandteile wurde das Belebungsbecken 2 der Versuchsanlage mit Reinsauerstoffbegasung betrieben. Bei dem Belebungsbecken der Versuchsanlage handelte es sich um eine Dreierkaskade mit 1,7 m³ Gesamtinhalt in geschlossener Ausführung mit Oberflächenbelüftern 13 und einer Sauerstoffzufuhr in den Gasraum des ersten Kaskadenbeckens 12a. Die Gasräume der einzelnen Kaskadenkammern 12a, b, c sind untereinander mittels Schlauchleitungen verbunden. Das Abgas, das vor allem aus $CO_2$ und Restsauerstoff besteht, verläßt das Belebungsbecken über die dritte Kaskadenkammer 12c.

Die Versuche wurden in den Monaten August bis November in zwei Abschnitten durchgeführt.

Im ersten Versuchsabschnitt wurde die Belebung mit einer vorgeschalteten Denitrifikation (vergl. Fig. 7) betrieben, indem vor das Belebungsbecken 2 eine durchmischte Denitrifikationskammer 11 geschaltet wurde, der ein Teilstrom des Ablaufs aus dem Belebungsbecken 2 zusammen mit dem Überlauf und den Dickschlamm aus dem Absetzbecken 1 zugeführt wurde.

Im zweiten Versuchsabschnitt wurde auf eine derartige gezielte Denitrifikation verzichtet, um die Auswirkungen eines nitrathaltigen Rücklaufschlamms auf die Phosphatrücklösung im anaeroben Absetzbecken zu beobachten (Fig. 8).

Die Betriebsdaten der beiden Versuchsabschnitte sind in Tabelle 1 zusammengefaßt.

## Tabelle 1

### Betriebsdaten der Versuchsanlage

| | | |
|---|---|---|
| Volumen des Absetzbeckens | $m^3$ | 2,0 |
| Volumen des Denitrifikationsbeckens ( nur in Versuchsphase 1 ) | $m^3$ | 1,0 |
| Volumen des Belebungsbeckens | $m^3$ | 1,7 |
| Volumen des Nachklärbeckens | $m^3$ | 2,0 |
| Abwassermenge ( Rohabwasser ) | $m^3/h$ | 0,30 |
| Rücklaufschlamm – Menge | $m^3/h$ | 0,09 |
| Überlaufmenge | $m^3/h$ | 0,33 |
| Dickschlamm – Menge | $m^3/h$ | 0,06 |
| Kreislaufführung ( nur in Versuchsphase 1 ) | $m^3/h$ | 0,60 |

Die Bestimmung von Gesamtphosphor, $BSB_5$, CSB sowie der Feststoffe im Zu- und Ablauf der Versuchsanlage erfolgte aus 24-h-Mischproben. Die 24-h-Mischprobennahme wurde über den gesamten Versuchszeitraum aufrechterhalten. Die Bestimmung auf Gesamtphosphor wurde grundsätzlich aus jeder Tagesmischprobe durchgeführt. Kontinuierlich wurde auch der Phosphorgehalt des Überschußschlammes erfaßt, um eine möglichst exakte Phosphorbilanzierung durchführen zu können.

Die Orthophosphatkonzentration wurde nur aus Stichproben ermittelt. $BSB_5$, CSB, abfiltrierbare Stoffe und alle Stickstoffparameter wurden aus Tagemischproben ermittelt, jedoch nicht täglich.

Die Analytik erfolgte in allen Fällen gemäß den Deutschen Einheitsverfahren (DEV). Bezüglich Phosphor wurde der Aufschluß mit Schwefelsäure/Perchlorsäure angewandt (DEV, D 11, 1975).

### Betriebsergebnisse

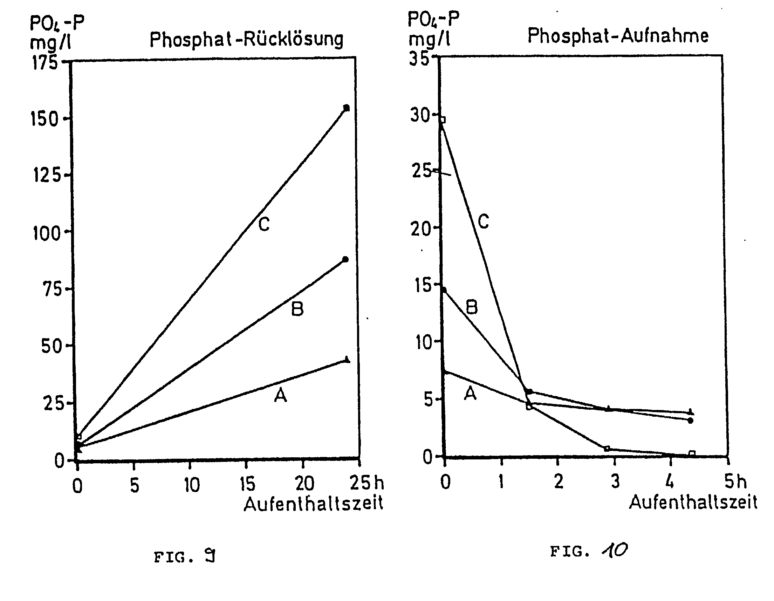

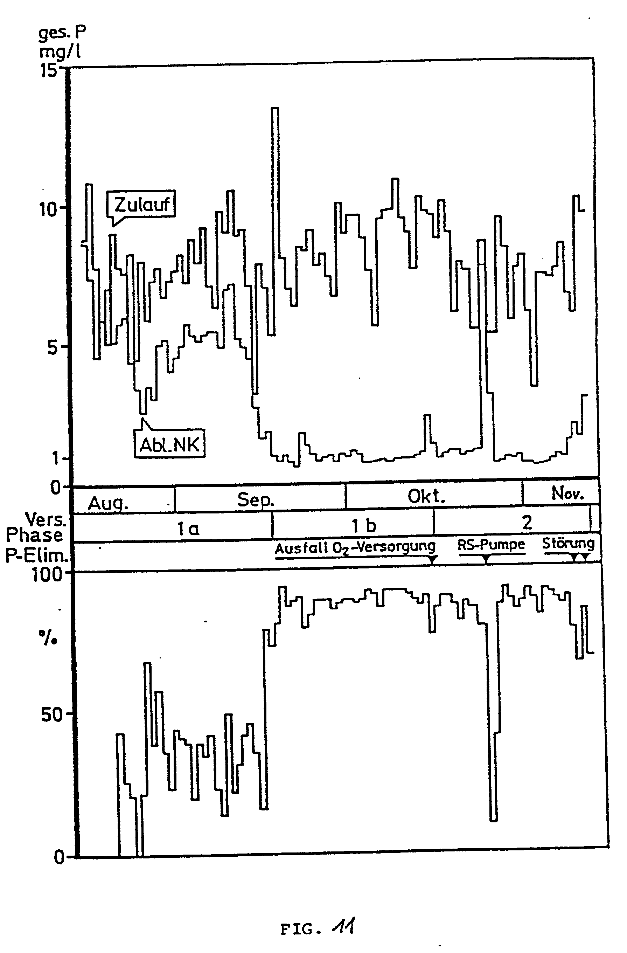

Die erzielten Ergebnisse sind am besten anhand der Diagramme in Fig. 11 zu beschreiben, die die Gesamtphosphor-Konzentrationen im Zu- und Ablauf der Versuchsanlage und die resultierende Phosphorelimination wiedergeben. Man erkennt, daß eine Einfahrphase von über 4 Wochen nötig war, bis eine Phosphoreliminationsleistung von über 80 % verzeichnet werden konnte. Bei Betrachtung der Eliminationsleistung erscheint der Anstieg gegen Ende der vierwöchigen Einfahrphase sprunghaft. Daß das Gesamtverfahren zumindest in bezug auf die Phosphorrücklösung während der Einfahrphase eine relativ stetige Veränderung erfährt, ist aus Fig. 9 zu erkennen, die die Phosphorrücklösung im anaeroben Becken zeigt. Fig. 10 zeigt dagegen die Phosphoraufnahme in der Belebungsbeckenkaskade, wobei die Kurven A, B und C jeweils die Verhältnisse 10, 18 bzw. 39 Tage nach Betriebsbeginn beschreiben. Kurve C repräsentiert dabei gleichzeitig den erreichten Gleichgewichtszustand.

Es ist deutlich zu erkennen, daß einer gesteigerten Phosphatrücklösung im anaeroben Absetzbecken eine zunehmende Phosphataufnahme im Belebungsbecken gegenübersteht. Allerdings hält sich die Netto-Elimination zunächt in Grenzen, d. h. es kommt nur zu einer geringen Mehraufnahme von Phosphat gegenüber der vorangegangenen Phosphatrücklösung. Diese Überkompensation der jeweils zuvor erzielten Phosphatrücklösung nimmt jedoch in der vierten Versuchswoche stark zu und führt ab ca. dem 30. Versuchstag zu einer praktisch vollständigen Phosphataufnahme im Belebungsbecken.

Da alle Meßergebnisse darauf hindeuten, daß ab diesem Tag ein Gleichgewichtszustand erreicht war, beziehen sich die in der nachfolgenden Tabelle 2 dokumentierten Ergebnisse auf den Zeitraum vom 32. Versuchstag bis zum Ende der Untersuchungen. Tage, bei welchen eine verminderte Eliminationsleistung eindeutig auf technische Störungen zurückzuführen war (Ausfall der Sauerstoffversorgung, Ausfall der Rücklaufschlammpumpe), blieben bei der Mittelwertbildung unberücksichtigt.

## Tabelle 2

### Betriebsergebnisse der Versuchsanlage in Versuchsphase 1b und Versuchsphase 2
### 24-Stunden-Mischproben, Mittelwerte

| Parameter | Meßstelle | Dim. | Versuchsphase 1b | Versuchsphase 2 |
|---|---|---|---|---|
| Gesamt-Phosphor Ges.-P | Rohabwasser | $g/m^3$ | 8,40 | 7,47 |
| | Ablauf | $g/m^3$ | 0,95 | 0,90 |
| | Elimination | % | 89 | 88 |
| Biologischer Sauerstoffbedarf $BSB_5$ | Rohabwasser | $g/m^3$ | 158 | 157 |
| | Ablauf | $g/m^3$ | 7 | 7 |
| | Elimination | % | 96 | 96 |
| Chemischer Sauerstoffbedarf CSB | Rohabwasser | $g/m^3$ | 327 | 303 |
| | Ablauf | $g/m^3$ | 53 | 39 |
| | Elimination | % | 84 | 87 |
| Feststoffe TS | Rohabwasser | $g/m^3$ | 135 | 101 |
| | Überlauf | $g/m^3$ | 147 | 74 |
| | Ablauf | $g/m^3$ | 18 | 10 |
| | Rücklaufschlamm | $g/m^3$ | 19.300 | 18.300 |
| | Dickschlamm | $g/m^3$ | 28.800 | 27.300 |
| | Belebtschlamm | $g/m^3$ | 5.340 | 5.140 |
| Schlammvolumen-index SVI | Belebtschlamm | $cm^3/g$ | 78 | 85 |
| Raumbelastung $B_R$ | | $kg/m^3 d$ | 0,67 | 0,66 |
| Schlammbelastung $B_{TS}$ | | $kg/kg\ d$ | 0,12 | 0,13 |

Wie Tabelle 2 zeigt, untergliedert sich der gesamte dokumentierte Untersuchungszeitraum in zwei Versuchsphasen zu je 28 Tagen Dauer (Phase 1b und 2 entsprechend Fig. 7 und 8). Wie Tabelle 2 zu entnehmen ist, wurde ein Langzeitmittelwert von weniger als 1 mg/l Gesamtphosphor im Ablauf der Versuchsanlage eingehalten. Die resultierende Eliminationsleistung lag bei nahezu 90 %.

Auch die CSB- und BSB5-Elimination ist sehr gut. Die Abbauleisung wird also durch die lange anaerobe Aufenthaltszeit des Rücklaufschlamms im vorgeschalteten Absetzbecken (ca. 24 Stunden) in keiner Weise beeinträchtigt. Die genannte Schlammaufenthaltszeit ergibt sich dabei aus der abgezogenen Dickschlammenge und dem Volumen der Schlammzone im Absetzbecken (ca. 1,5 m³).

Aufgrund der guten Absetzeigenschaften des Belebtschlamms (SVI ca. 80) konnten hohe Feststoffkonzentrationen im Belebungsbecken erreicht werden. Trotz der relativ niedrigen Schlammbelastung blieb die Nitrifikation über den gesamten Untersuchungszeitraum unvollständig. Im Mittel war lediglich eine 40%ige Ammonium-Elimination zu verzeichnen, die Nitrat-Werte des Ablaufs blieben auf dem Bereich unter 10 mg/l NO3-Stickstoff beschränkt. Für die Hemmung der Nitrifikation sind jedoch wahrscheinlich keine auf Besonderheiten des erfindungsgemäßen Verfahrens zurückzuführenden Einflüsse verantwortlich zu machen, sondern die bei der Versuchsanlage verwendete Sauerstoffbegasungstechnik, die zu einer Akkumulation von CO2 führt. Der niedrige pH-Wert im Belebungsbecken von 6,5 und die Zulauf-Säurekapazität von lediglich 5 mmol/l deuten darauf hin, daß in diesem kritischen Belastungsbereich bei Sauerstoffbegasungsanlagen schon eine Hemmung der Nitrifikation auftreten kann.

Aufgrund der beschränkten Nitrifikation konnte auch in Versuchsphase 2 (ohne vorgeschaltete Denitrifikation) niemals Nitrit oder Nitrat im Rücklaufschlamm festgestellt werden.

Untersuchungen, welche Aufschluß darüber geben sollten, wie sich der Restphosphorgehalt des Ablaufs zusammensetzt, ergaben das in Tabelle 3 dokumentierte Bild. In Tabelle 3 sind Mittelwerte von Stichprobenuntersuchungen des Ablaufs sowie des Belebtschlamm der 3. Kaskadenkammer 12c enthalten. In der abfiltrierten Probe aus der 3. Kaskadenkammer sind demnach nur noch 0,15 mg/l PO4-Phosphor nachweisbar. Orthophosphat wird vom Belebtschlamm also praktisch vollständig aufgenommen. Im Ablauf 8 sind dagegen 0,25 mg/l PO4-Phosphor nachzuweisen, wobei die geringe Erhöhung gegenüber dem Belebungsbeckenablauf 7 auf eine beginnende Phosphatrücklösung im Nachklärbecken 3 zurückzuführen ist. In Verbindung mit den ebenfalls dokumentierten Gesamtphosphorgehalten der originalen und filtrierten Ablaufproben ergibt sich das Bild, daß sich der Gesamtphosphorgehalt des Ablaufs zu ungefähr gleichen Teilen aus Orthophosphat-Phosphor, abfiltrierbaren Phosphorverbindungen und nichtabfiltrierbaren Phosphorverbindungen (ohne Orthophosphat) zusammensetzt. Von diesen Bestandteilen ist der zuletztgenannte am schwierigsten erfaßbar, die anderen könnten durch eine weiter verbesserte Verfahrenstechnik noch weiter reduziert werden (z. B. Abwasserfiltration oder auch Flockungsfiltration).

Ein Klärschlamm aus konventionellen Kläranlagen weist Phosphorgehalte von 1 bis 2 Gew.-% auf . Hiermit Korrelieren übliche Phosphoreliminationsraten von ca. 20 %. Einer erhöhten Phosphoreliminationen muß im Falle der Versuchsanlage ein erhöhter Phosphorgehalt des Überschußschlammes gegenüberstehen. Die Bestimmung des Phosphorgehalts des Überschußschlammes ergab einen Wert von im Mittel 4,0 Gew.-% Phosphor, bezogen auf die Trockensubstanz, bzw. 5,5 Gew.-% Phosphor, bezogen auf die organische Trockensubstanz.

Nimmt man aufgrund möglicher Fehlerquellen einen Toleranzbereich von 10 % an, so korreliert der mit dem Phosphor gehalt des Überschußschlammes erhaltene Wert recht genau mit der beobachteten Phosphorelimination. In Tabelle 4 sind die entsprechenden Daten zusammengefaßt.

Es ist dabei darauf hinzuweisen, daß bei dem erfindungsgemäßen Verfahren die spezifische Überschußschlamm-Produktion aufgrund der nicht vorhandenen Vorklärung vergleichsweise hoch ausfällt, was, wie einleitend ausgeführt wurde, für eine hohe Phosphorelimination aus grundsätzlichen Überlegungen vorteilhaft ist.

Der dreimonatige Testbetrieb der Versuchsanlage im halbtechnischen Maßstab zeigt somit, daß nach einer einmonatigen Einfahrphase eine Gesamtphosphorelimination von über 80 % stabil eingehalten werden konnte. Als Langzeit-Mittelwert wurde eine Gesamtphosphorelimination von knapp 90 % ermittelt, bei Ablaufkonzentrationen von im Mittel 0,93 mg Gesamtphosphor/l und 0,23 mg PO4-Phosphor/l.

Das erfindungsgemäße Verfahren ist ohne großen Investitionsaufwand in die Praxis umzusetzen. Bei bestehenden Kläranlagen können die Verfahrenselemente Vorklärbecken, Belebungsbecken und Nachklärbecken mit einem geringen Aufwand so umstrukturiert werden, daß eine weitgehende biologische Phosphorelimination nach dem erfindungsgemäßen Verfahren erzielt wird.

Tabelle 3: Gesamt-Phosphor und Orthophosphat-Phosphor in Ablauf- und Belebtschlamm-Stichproben

Mittelwerte von Meßdaten aus dem Zeitraum nach der Beendigung der Einfahrphase der Versuchsanlage

| Parameter | Probe | Dim. | Versuchsphase 1b+2 |
|---|---|---|---|
| Gesamt-Phosphor | Ablauf, unfiltr. | $g/m^3$ | 0,75 |
| Ges.-P | Ablauf, filtr.* | $g/m^3$ | 0,47 |
| Orthophosphat-Phosphor | Ablauf, filtr.* | $g/m^3$ | 0,23 |
| $PO_4$-P | Belebtschlamm, Kammer 3, filtr.* | $g/m^3$ | 0,15 |

*Membranfilter, Porendurchmesser 0,45 µm

Tabelle 4: Phosphorbilanz der Versuchsanlage, beruhend auf Meßdaten aus dem Zeitraum nach der Beendigung der Einfahrphase der Versuchs- anlage

| Eliminierte Phosphormenge | g P pro $m^3$ Abwasser | 7,0 |
|---|---|---|
| Phosphorgehalt des Überschußschlammes | g P pro g TS | 0,04 |
| Anfallende Überschußschlamm-Menge* | g TS pro $m^3$ Abwasser | 160 |

*entspricht einer spezifischen Überschußschlamm-Produktion von

1,0 Kg ÜS/Kg $BSB_5$

## Patentansprüche

1. Verfahren zur Reinigung phosphathaltiger Abwässer unter biologischer Phosphorelimination, bei dem die absetzbaren und/oder nicht absetzbaren Abwässer-Bestandteile in aufeinanderfolgenden Behandlungsbecken zuerst unter anaeroben und dann unter aeroben Bedingungen mit Belebtschlamm behandelt werden und bei dem ein belebter Rücklaufschlamm aus dem Nachklärbecken in die unter anaeroben Bedingungen arbeitende Stufe zurückgeführt wird, dadurch gekennzeichnet, daß die Behandlung unter anaeroben Bedingungen in einem Absetzbecken erfolgt, in dem die Schlamm-Verweilzeit die hydraulische Verweilzeit übersteigt.

2. Verfahren nach Anspruch 1, dadurch gekennzeichnet, daß dem unter anaeroben Bedingungen gehaltenen Absetzbecken ein belüftetes Belebungsbecken nachgeschaltet ist, dem ein Überlauf aus dem Absetzbecken sowie ein Dickschlamm, der vom Boden des Absetzbeckens abgezogen wird, zugeführt werden.

3. Verfahren nach Anspruch 1 oder 2, dadurch gekennzeichnet, daß dem unter anaeroben Bedingungen gehaltenen Absetzbecken Rohabwässer, die noch einen hohen Anteil an absetzbaren Stoffen aufweisen, zugeführt werden, die am Kopf des Beckens mit dem Rücklaufschlamm gemischt werden.

4. Verfahren nach Anspruch 1 oder 2, dadurch gekennzeichnet, daß dem unter anaeroben Bedingungen gehaltenen Absetzbecken nur vorgeklärtes Abwasser zugeführt wird, während die absetzbaren Abwasserbestandteile abgezogen werden.

5. Verfahren nach einem der Ansprüche 1 bis 3, dadurch gekennzeichnet, daß die Einleitung des Gemisches aus Rohabwasser und Rücklaufschlamm im Bereich der Oberfläche des unter anaerobe Bedingungen gehaltenen Absetzbeckens erfolgt.

6. Verfahren nach einem der Ansprüche 1 bis 4, dadurch gekennzeichnet, daß dem unter aeroben Bedingungen gehaltenen Behandlungsbecken zugeführter Dickschlamm aus dem unter anaeroben Bedingungen gehaltenen Absetzbecken in einer Menge abgezogen wird, die der kombinierten Feststoff-Fracht pro Zeiteinheit aus Rohabwasser und Rücklaufschlamm entspricht.

7. Verfahren nach Anspruch 1 oder 2, dadurch gekennzeichnet, daß das Abwasser in einem vorgeschalteten Vorklärbecken in absetzbare Abwasserbestandteile, d.h. in Vorklärschlamm, und in nicht absetzbare Abwasserbestandteile, d.h. in vorgeklärtes Abwasser, aufgetrennt wird.

8. Verfahren nach Anspruch 7, dadurch gekennzeichnet, daß dem unter anaeroben Bedingungen gehaltenen Absetzbecken nur die absetzbaren Abwasserbestandteile zugeführt werden, während die nicht absetzbaren Abwasserbestandteile direkt in das unter aeroben Bedingungen gehaltene Behandlungsbecken geleitet werden.

9. Verfahren nach einem Ansprüche 1 bis 8, dadurch gekennzeichnet, daß aus dem unter anaeroben Bedingungen gehaltenen Absetzbecken abgezogener Dickschlamm in phosphatreiches Wasser und phosphatarmen Schlamm aufgetrennt wird, das phosphatreiche Wasser einer Kalkfällung unterzogen wird, wobei entstehender Fällschlamm abgezogen und überstehendes Wasser dem unter aeroben Bedingungen gehaltenen Behandlungsbecken zugeführt wird, während der phosphatarme Schlamm direkt dem unter aeroben Bedingungen gehaltenem Behandlungsbecken zugeleitet wird.

10. Verfahren nach Anspruch 9, dadurch gekennzeichnet, daß die Auftrennung des Dickschlamms in phosphatreiches Wasser und phosphatarmen Schlamm durch Zentrifugieren erfolgt.

11. Verfahren nach einem der Ansprüche 1 bis 8, dadurch gekennzeichnet, daß aus dem unter anaeroben Bedingungen gehaltenen Absetzbecken abgezogener Dickschlamm vor Einleitung in das unter aeroben Bedingungen gehaltenen Behandlungsbecken einer Kalkfällung unterzogen wird.

12. Verfahren nach einem der Ansprüche 1 bis 11, dadurch gekennzeichnet, daß dem belüfteten Belebungsbecken direkt das Nachklärbecken nachgeschaltet ist, aus dem der Belebtschlamm in Form des Rücklaufschlamms und eines Überschußschlamms abgezogen wird.

13. Verfahren nach einem der Ansprüche 1 bis 12, dadurch gekennzeichnet, daß es in ein Gesamtverfahren mit vorgeschalteter Denitrifikation, simultaner Denitrifikation oder mit Wechselbetrieb integriert ist.

14. Anlage zur Reinigung phosphathaltiger Abwässer unter biologischer Phosphorelimination mit einem unter anaeroben Bedingungen arbeitenden Becken, einem nachgeschalteten belüfteten Belebungsbecken und einem Nachklärbecken, aus dem ein Überschußschlamm und ein in das unter anaeroben Bedingungen arbeitende Becken zurückgeführter Rücklaufschlamm abgezogen werden, dadurch gekennzeichnet, daß das unter anaeroben Bedingungen arbeitende Becken ein Absetzbecken (1) ist, das eine Zuleitung (4) für ein Gemisch aus Rücklaufschlamm und absetzbaren und/oder nicht absetzbaren Abwasserbestandteilen, eine Ableitung (5) für den Überlauf, die mit dem nachgeschalteten belüfteten Belebungsbecken (2) verbunden ist, sowie eine Ableitung (6) für den Dickschlamm vom Boden des Absetzbeckens (1), die ebenfalls mit dem nachgeschalteten belüfteten Belebungsbecken (2) verbunden ist, aufweist, wobei zwischen das Absetzbecken (1) und das belüftete Belebungsbecken (2) gegebenenfalls weitere Behandlungsbecken geschaltet sind, durch die der Überlauf oder der Überlauf und der Dickschlamm vor ihrer Einleitung in das belüftete Belebungsbecken (2) hindurchgeleitet werden.

15. Analge nach Anspruch 14, dadurch gekennzeichnet, daß die Zuleitung (4) für das Gemisch aus Rücklaufschlamm und den Abwasserbestandteilen in der oberen Beckenzone in das Absetzbecken (1) einmündet.

16. Anlage nach Anspruch 14 oder 15, dadurch gekennzeichnet, daß das Absetzbecken (1) ein umfunktioniertes übliches Vorklärbecken ist, das durch Verbindung der Rohabwasser-Einleitung mit einer Rücklaufschlamm-Zuleitung und Verbindung der Schlammableitung mit dem nachgeschalteten Belebungsbecken (2) modifiert ist.

17. Anlage nach einem der Ansprüche 14 bis 16, dadurch gekennzeichnet, daß dem unter anaeroben Bedingungen arbeitenden Absetzbecken (1) ein Vorklärbecken (16) vorgeschaltet ist, das einen Zulauf (19) für Rohabwasser, eine mit dem Belebungsbecken (2) verbundene Ableitung (18) für vorgeklärtes Abwasser und eine mit dem Absetzbecken (1) verbundene Ableitung (17) für Vorklärschlamm aufweist.

18. Anlage nach einem der Ansprüche 14 bis 17, dadurch gekennzeichnet, daß die Ableitung (6) für den Dickschlamm vom Boden des Absetzbeckens (1) mit einer Zentrifuge (20) in Verbindung steht, die eine Ableitung (21) für phosphatreiches Wasser und eine Ableitung (25) für phosphatarmen Schlamm aufweist, wobei die Ableitung (21) für das phosphatreiche Wasser mit einem mit einer Kalkzugabeeinrichtung versehenen Mischbecken (22), einem nachfolgenden Sedimentationsbecken (23) und dem darauffolgenden Belebungsbecken (2) in Verbindung steht, während die Ableitung (25) für den phosphatarmen Schlamm direkt mit dem Belebungsbecken (2) verbunden ist.

EP 0 273 111 B1

19. Anlage nach einem der Ansprüche 14 bis 17, dadurch gekennzeichnet, daß die Ableitung (6) für den Dickschlamm vom Boden des Absetzbeckens (1) mit einem mit einer Kalkzugabeeinrichtung versehenen Mischbecken (22) und dem nachgeschalteten Belebungsbecken (2) in Verbindung steht.

**Revendications**

1. Procédé de purification d'eaux usées contenant des phosphates pour élimination biologique du phosphore dans lequel les constituants des eaux usées susceptibles de se déposer et/ou de ne pas se déposer sont traités dans des bassins de traitement successifs, tout d'abord dans des conditions anaérobies et ensuite dans des coditions aérobies à l'aide de boues activées et dans lequel une boue activée de recyclage provenant du bassin de post-clarification est recyclée dans l'étape de traitement fonctionnant dans des conditions anaérobies, procédé caractérisé en ce que le traitement dans des conditions anaérobies est mis en œuvre dans un bassin de décantation dans lequel le temps de séjour de la boue dépasse le temps de séjour hydraulique.

2. Procédé selon la revendication 1, caractérisé en ce que le bassin de décantation maintenu dans des conditions anaérobies est suivi d'un bassin d'activation aéré dans lequel on introduit du trop-plein provenant du bassin de décantation ainsi qu'une boue épaissie prélevée au fond du bassin de décantation.

3. Procédé selon la revendication 1 ou 2, caractérisé en ce que, dans le bassin de décantation maintenu dans des conditions anaérobies, on introduit des eaux usées brutes qui contiennent encore une proportion élevée de substances susceptibles de se déposer qui sont mélangées avec la boue de recyclage en tête de bassin.

4. Procédé selon l'une quelconque des revendications 1 ou 2, caractérisé en ce que, dans le bassin de décantation maintenu dans des conditions anaérobies, on n'introduit que des eaux usées préclarifiées alors que l'on prélève les constituants des eaux usées susceptibles de se déposer.

5. Procédé selon l'une quelconque des revendications 1 à 3, caractérisé en ce que l'introduction du mélange d'eaux usées brutes et de boue de recyclage a lieu près de la surface du bassin de décantation maintenu dans des conditions anaérobies.

6. Procédé selon l'une quelconque des revendications 1 à 4, caractérisé en ce que la boue épaissie, provenant du bassin de décantation maintenu dans des conditions anaérobies, est amenée au bassin de traitement maintenu dans des conditions aérobies et est prélevée en quantité correspondant à la somme par unité de temps de la charge en matières solides provenant des eaux usées brutes et de la boue de recyclage.

7. Procédé selon la revendication 1 ou 2, caractérisé en ce que les eaux usées sont séparées dans un bassin de préclarification disposé en amont en constituants d'eaux usées susceptibles de se déposer, c'est-à-dire en boue de préclarification, et en constituants d'eaux usées non susceptibles de se déposer, c'est-à-dire en eaux usées préclarifiées.

8. Procédé selon la revendication 7, caractérisé en ce que, dans le bassin de décantation maintenu dans des conditions anaérobies, on n'introduit que les constituants des eaux usées susceptibles de se déposer alors que l'on fait passer leurs autres constituants non susceptibles de se déposer directement dans le bassin de traitement maintenu dans des conditions aérobies.

9. Procédé selon l'une quelconque des revendications 1 à 8, caractérisé en ce que la boue épaissie, prélevée dans le bassin de décantation maintenu dans des conditions anaérobies, est séparée en un flux d'eau riche en phosphates et un flux de boue pauvre en phosphates, l'eau riche en phosphates est soumise à une précipitation à la chaux, la boue de précipitation qui se forme étant prélevée et l'eau surnageante étant amenée au bassin de traitement maintenu dans des conditions aérobies alors que la boue pauvre en phosphates est amenée directement au bassin de traitement maintenu dans des conditions aérobies.

10. Procédé selon la revendication 9, caractérisé en ce que la séparation de la boue épaissie en eau riche en phosphates et en boue pauvre en phosphates se fait par centrifugation.

11. Procédé selon l'une des revendications 1 à 8, caractérisé en ce que la boue épaissie prélevée dans le bassin de décantation maintenu dans des conditions anaérobies est soumise à une précipitation à la chaux, avant son introduction dans le bassin de traitement maintenu dans des conditions aérobies.

12. Procédé selon l'une quelconque des revendications 1 à 11, caractérisé en ce que le bassin d'activation aéré est directement suivi du bassin de post-clarification dans lequel la boue activée est prélevée sous la forme d'une boue de recyclage et d'une boue en excès.

13. Procédé selon l'une quelconque des revendications 1 à 12, caractérisé en ce qu'on intègre, dans un procédé d'ensemble fonctionnant avec dénitrification préliminaire, une dénitrification fonctionnant simultanément ou alternativement.

14. Installation de purification d'eaux usées contenant des phosphates avec élimination biologique du phosphore à l'aide d'un bassin travaillant dans des conditions anaérobies, d'un bassin d'activation aéré disposé en aval et d'un bassin de post-clarification dans lequel on prélève une boue en excès et une boue de recyclage recyclée dans le bassin travaillant dans des conditions anaérobies, caractérisée en ce que le bassin travaillant dans des conditions anaérobies est un bassin de décantation (1) comportant une conduite d'arrivée (4) pour un mélange de boue de recyclage et de constituants d'eaux usées susceptibles de se déposer et/ou de ne pas se déposer, une conduite de sortie (5) pour le trop-plein raccor-

14

dée au bassin aéré d'activation (2) disposé en aval, ainsi qu'une conduite d'évacuation (6) pour la boue épaissie provenant du fond du bassin de décantation (1), également raccordée avec le bassin aéré d'activation (2) disposé en aval, et, en ce qu'entre le bassin de décantation (1) et le bassin aéré d'activation (2), sont éventuellement disposés d'autre bassins de traitement à travers lesquels on fait passer soit le trop-plein seul, soit le trop-plein en même temps que la boue épaissie avant leur introduction dans le bassin aéré d'activation (2).

15. Installation selon la revendication 14, caractérisée en ce que la conduite d'arrivée (4) destinée au mélange de boue de recylage et des constituants des eaux usées débouche dans la zone supérieure du bassin de décantation (1).

16. Installation selon la revendication 14 ou 15, caractérisée en ce que le bassin (1) est un bassin habituel de préclarification auquel on a donné une fonction de décantation et qui est modifié par liaison de la conduite d'introduction des eaux usées avec une conduite d'arrivée de boue de recyclage et par liaison de la conduite de sortie des boues avec le bassin d'activation (2) disposé en aval.

17. Installation selon l'une quelconque des revendications 14 à 16, caractérisée en ce que le bassin de décantation (1) fonctionnant dans des conditions anaérobies est précédée d'un bassin de préclarification (16) qui comporte une conduite d'arrivée (19) d'eaux usées brutes, une conduite d'évacuation (18) reliée au bassin d'activation (2) pour les eaux usées préclarifiées et une conduite de sortie (17) pour la boue de préclarification reliée au bassin de décantation (1).

18. Installation selon l'une quelconque des revendications 14 ou 17, caractérisée en ce que la conduite d'évacuation (6) destinée à la boue épaissie provenant du fond du bassin de décantation (1) est reliée à une centrifugueuse (20) qui comporte une évacuation (21) d'eau riche en phosphates et une conduite d'évacuation (25) de boue pauvre en phosphates, la conduite d'évacuation (21) destinée à l'eau riche en phosphates étant en liaison avec un bassin mélangeur (22) pourvu d'un dispositif d'introduction de chaux, avec un bassin de sédimentation (23) disposé en aval et avec le bassin d'activation (2) qui lui fait suite, alors que la conduite d'évacuation (25) destinée à la boue pauvre en phosphates est directement reliée au bassin d'activation (2).

19. Installation selon l'une quelconque des revendications 14 à 17, caractérisée en ce que la conduite d'évacuation (6) destinée à la boue épaissie provenant du fond du bassin de décantation (1) est reliée à un bassin de mélange (22) pourvu d'un système d'addition de chaux et au bassin d'activation (2) disposé en aval.

## Claims

1. A process for the purification of sewage which contains phosphates by biological phosphorus elimination in which the settleable and/or non-settleable sewage components are treated with activated sludge in consecutive activated sludge tanks firstly under anaerobic conditions and then aerobic conditions and in which an activated reflux sludge is fed back from the secondary sedimentation tank into the stage operating under anaerobic conditions, characterised in that the treatment under anaerobic conditions takes place in a settling tank in which the dwell period of the sludge exceeds the hydraulic dwell period.

2. A process as claimed in Claim 1, characterised in that the settling tank which operates under anaerobic conditions is connected at its output to an aerated activated sludge tank which is supplied with an overflow from the settling tank and with a thick sludge discharged from the bottom of the settling tank.

3. A process as claimed in Claim 1 or 2, characterised in that the settling tank which is operated under anaerobic conditions is supplied with raw sewage which still contains a high proportion of settleable materials and which is mixed at the head of the tank with the reflux sludge.

4. A process as claimed in Claim 1 or 2, characterised in that the settling tank which is operated under anaerobic conditions is supplied only with preclarified sewage whilst the settleable sewage components are discharged.

5. A process as claimed in one of Claims 1 to 3, characterised in that the introduction of the mixture of raw sewage and reflux sludge takes place in the region of the surface of the settling tank which is operated under anaerobic conditions.

6. A process as claimed in one of Claims 1 to 4, characterised in that thick sludge which is supplied to the treatment tank which is operated under aerobic conditions is discharged from the settling tank which is operated under anaerobic conditions in a quantity which corresponds to the combined solids load per time unit of raw sewage and reflux sludge.

7. A process as claimed in Claim 1 or 2, characterised in that the sewage is separated in a preceding preclarifying tank into settleable sewage components, i.e. preclarified sludge and non-settleable sewage components, i.e. preclarified sewage.

8. A process as claimed in Claim 7, characterised in that the settling tank which is operated under anaerobic conditions is supplied only with the settleable sewage components, whilst the non-settleable sewage components are fed directly into the treatment tank which is operated under aerobic conditions.

9. A process as claimed in one of Claims 1 to 8, characterised in that thick sludge discharged from the settling tank which is operated under anaerobic conditions is separated into high-phosphate water and low-phosphate sludge, and that the high-phosphate water is subjected to lime precipitation in which the precipitated sludge which is produced is discharged and excess water is supplied to the treatment tank operated under aerobic conditions, whereas the low-phosphate sludge is fed directly to the treatment tank which is operated under aerobic conditions.

10. A process as claimed in Claim 9, characterised in that the separation of the thick sludge into high-phosphate water and low-phosphate sludge takes place by centrifugation.

11. A process as claimed in one of Claims 1 to 8, characterised in that thick sludge discharged from the settling tank which is operated under anaerobic conditions is subjected to lime precipitation before being introduced into the treatment tank which is operated under aerobic conditions.

12. A process as claimed in one of Claims 1 to 11, characterised in that at its output end the aerated activated sludge tank is connected directly to the secondary sedimentation tank from which the activated sludge is discharged in the form of the reflux sludge and an excess sludge.

13. A process as claimed in one of Claims 1 to 12, characterised in that it is integrated into a combined process comprising preceding denitrification, simultaneous denitrification or alternating denitrification.

14. An apparatus for the purification of sewage which contains phosphates by biological phosphorus elimination comprising a tank which operates under anaerobic conditions, a subsequent aerated activated sludge tank, and a secondary sedimentation tank from which are discharged an excess sludge and a reflux sludge which is fed back into the tank which operates under anaerobic conditions, characterised in that the tank which operates under anaerobic conditions is a settling tank (1) which is provided with an inflow (4) for a mixture of reflux sludge and settleable and/or non-settleable sewage components, an outflow (5) for the overflow connected to the subsequent, aerated activated sludge tank (2), and an outflow (6, for the thick sludge from the bottom of the settling tank (1) which is likewise connected to the subsequent, aerated activated sludge tank (2), where, between the settling tank (1) and the aerated activated sludge tank (2) where appropriate further treatment tanks are connected through which the overflow or the overflow and the thick sludge are conducted before they are introduced into the aerated activated sludge tank (2).

15. An apparatus as claimed in Claim 14, characterised in that the inflow (4) for the mixture of reflux sludge and the sewage components in the upper tank zone leads into the settling tank (1).

16. An apparatus as claimed in Claim 14 or 15, characterised in that the settling tank (1) consists of a functionally modified, conventional preclarifying tank which has been modified by connecting the raw sewage inflow to a reflux sludge inflow and connecting the sludge outflow to the following activated sludge tank (2).

17. An apparatus as claimed in one of Claims 14 or 16, characterised in that the settling tank (1) which operates under anaerobic conditions is preceded by a preclarifying tank (16) which is provided with an inflow (19) for raw sewage, an outflow (18) for preclarified sewage connected to the activated sludge tank (2), and an outflow (17) for preclarified sludge connected to the settling tank (1).

18. An apparatus as claimed in one of Claims 14 to 17, characterised in that the outflow (6) for the thick sludge from the bottom of the settling tank (1) is connected to a centrifuge (20) which is provided with an outflow (21) for high-phosphate water and an outflow (25) for low-phosphate sludge, where the outflow (21) for the high-phosphate water is connected to a mixing tank (22) provided with a lime supply device, to a following sedimentation tank (23) and to the following activated sludge tank (2), whereas the outflow (25) for the low-phosphate sludge is directly connected to the activated sludge tank (2).

19. An apparatus as claimed in one of Claims 14 to 17, characterised in that the outflow (6) for the thick sludge from the bottom of the settling tank (1) is connected to a mixing tank (22) provided with a lime supply device and to the following activated sludge tank (2).

FIG. 1

# FIG. 2

# FIG. 3

EP 0 273 111 B1

FIG. 4

EP 0 273 111 B1

FIG. 5

FIG. 6

EP 0 273 111 B1

FIG. 7

FIG. 8

Phosphat-Aufnahme

PO₄-P
mg/l

C

B

A

Aufenthaltszeit

FIG. 10

Phosphat-Rücklösung

PO₄-P
mg/l

C

B

A

Aufenthaltszeit

FIG. 9

# EP 0 273 111 B1

FIG. 11